# EUROPEAN PATENT SPECIFICATION

(11) **EP 3 398 456 B1**
(45) Date of publication and mention of the grant of the patent: **01.01.2020**
(21) Application number: 18169964.6
(22) Date of filing: 27.04.2018
(51) Int. Cl.: A23N 5/00

(54) **VARIABLE STROKE SHELLER**
HUBVARIABLER SCHÄLER
DÉCORTIQUEUR À COURSE VARIABLE

(30) Priority: 03.05.2017 IT 201700047518
(43) Date of publication of application: 07.11.2018
(73) Proprietor: CALA' S.R.L., 93100 Caltanissetta (IT)
(72) Inventor: CALÀ, Cataldo, 93100 Caltanissetta (IT)
(74) Representative: Manresa Val, Manuel

(56) References cited:
- DE-U1-202012 012 354
- FR-A- 585 184
- GB-A- 254 368
- US-A- 1 412 443
- US-A- 1 761 823

## Description

The present invention refers to a variable stroke sheller, that is a machine for shelling almonds, walnuts, hazelnuts, dried fruit in general, by means of the joint action of jaws.

Shellers are known comprising kinematic mechanisms for crushing the almonds, by means of a roller in relative motion with respect to a coaxial inner cage formed by steel bars. During the rotation, the steel bars approach the roller causing the variation of the distance in order to allow crushing the almonds.

A problem of the known shelling machines concerns the positioning with random orientation of the almonds in the zone facing the steel bars, due to the oval and flat shape of the almonds, therefore, if the almond is positioned on the flat back, the crushing can take place regularly, otherwise the crushing may cause damage to the fruit.

The machine most used in the almond processing sector is of the type comprising horizontally sliding jaws made of steel or cast iron. The jaws are provided with holes and semi-holes cooperating and in relative motion with respect to the steel structure.

Usually, a jaw is fixed, being it locked to the steel structure, while two other jaws can slide relative to the structure by means of a kinematic mechanism comprising a rotating shaft, an eccentric, a connecting rod positioned between the eccentric and the movable jaws.

Almonds to be crushed pass inside the holes.

Moreover, a first movable jaw provided with semi-holes slides in one direction, while a second movable jaw provided with semi-holes slides in the opposite direction.

By rotating of the shaft, a sliding reciprocating movement of the jaws is obtained in order to be able to crush the almonds passing along the set of axially offset holes during the stroke.

However, a machine of this type may cause damage to precious and fragile fruit such as almonds.

To avoid damage to the fruit, the variation of the jaws' stroke according to the size of the almonds and the type of shell, is used, for example, by distinguishing a woody and compact, rather than porous and fragile, shell.

The variation of the stroke of the jaws is carried out by acting on the kinematic mechanisms, by means of a procedure that provides for the interruption of the operation of the machine and therefore of the production cycle, in order to manually adjust the stroke.

For example, for a machine with ten connecting rods inserted in a single shaft, the variation of the stroke is achieved by manually rotating each cam associated to the relative connecting rod, the cams being inserted one inside the other. The procedure is complex and involves releasing the tightening screws, manually rotating and relocking the tightening screws, in order to then restart the machine. Moreover, it is necessary to make sure that the product is processed in the most appropriate way, otherwise, in presence of damaged fruit or shells not totally broken, the operation needs to be repeated.

The state of the art is represented by the utility model patent DE202012012354U1 concerning a nutcracker comprising a base for receiving the respective walnut on a receiving surface, a clamping bar that can be lowered against the base. By means of the receiving surface, the base receives several walnuts adjacent to each other, the clamping bar arranged approximately symmetrically with respect to rectilinear guides, actuating means lowered directly downwards against the base acting upon it.

Further, the US patent US1,761,823 "Nut cracking machine" from 1928 refers to a nut cracking machine of the rotary drum type, comprising a plurality of coating pairs of anvil and hummer plunges, means for actuating said plungers initially to grip the nuts and an eccentrically mounted, adjustable cracking wheel in the path of said hammer plungers to cause them to fracture the gripped nuts.

The measurement of the distance between the clamping bar and the base may have a certain adjustment of the distances, so as to be able to break only the shells and protect the kernel of the walnuts.

Furthermore, a stop device to limit the downward movement of the clamping bar may also be provided.

To ensure a gradual adjustment of the distance between the clamping bar and the base, a lever has at least two holes in a different position, to allow the insertion of an axis of a hinge.

Despite these efforts, there remains the need to improve the procedure for the adjustment of the moving parts of a sheller.

The object of the present invention is to provide a sheller capable of adjusting the stroke of the jaws during processing, avoiding the production stop.

A further object is to provide a fully automatic sheller by adopting a simple and economical embodiment solution.

A further object is to solve the problem of the adjustments of the stroke of the jaws during processing, avoiding to stop the shelling plant in order to safeguard the safety of the operator and to eliminate any manual intervention considered dangerous.

The above and other objects and advantages of the invention, which will become clear from the continuation of the description, are achieved with a sheller, as that described in claim 1. Preferred embodiments and non-ordinary variants of the present invention form the object of the dependent claims.

It is understood that all of the annexed claims form an integral part of the present description.

It will be immediately obvious that countless variations and changes (for example relating to shape, dimensions, arrangements and parts with equivalent functionalities) may be made to what described without departing from the scope of protection of the invention as it appears from the appended claims.

The present invention shall be better described by some preferred embodiments, given as a non-limiting example, with reference to the attached drawings, wherein:
Figure 1 shows an orthogonal projection view of an embodiment of the sheller according to the present invention;
Figure 2 shows an orthogonal projection partial side view of an embodiment of the sheller according to the present invention; and
Figures 3, 4, 5 show a partial side view of the main adjustment steps of an embodiment of the sheller according to the present invention.

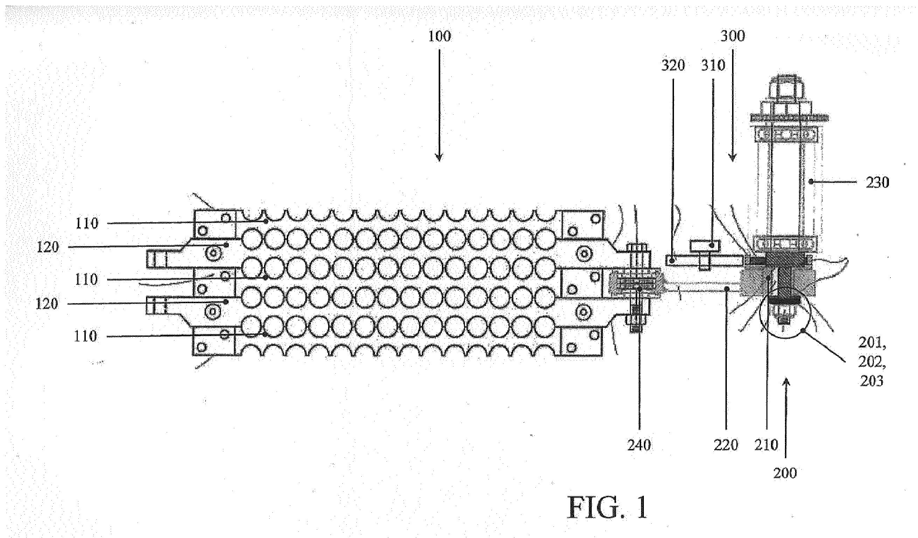

Referring to Figure 1, it is possible to note that a sheller, for shelling dried fruit, comprises means cooperating in relative motion 100, for receiving the dried fruit and breaking the shell of the fruit, by means of a reciprocated motion device 200 and stroke adjustment means 300 of the means cooperating in relative motion 100.

Advantageously, the reciprocated motion device 200 comprises an outlet eccentric element 210 connected to at least one connecting rod 220. The outlet eccentric element 210 is constrained to rotation by controlled grip locking means 201, 202, 203 of the rotation axis.

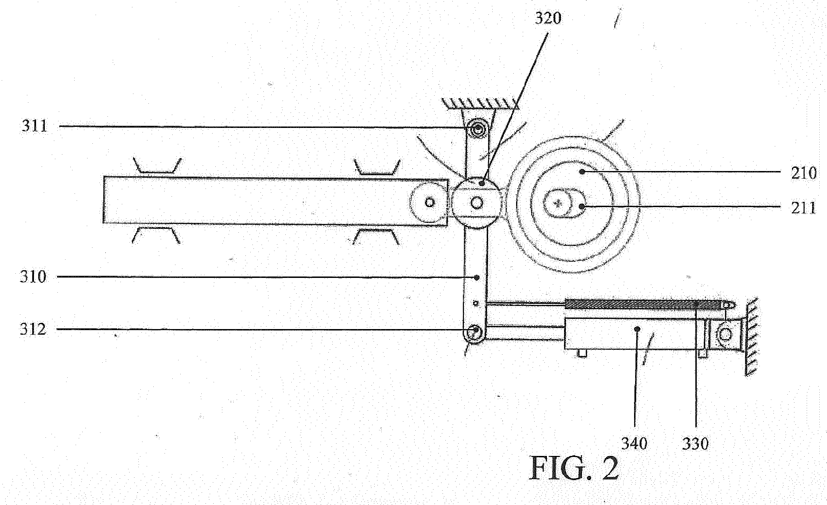

Referring to Figure 2, the outlet eccentric element 210 includes a slotted hole 211 crossed by a rotating shaft driven by a motor 230.

The controlled grip locking means 201, 202, 203 comprise at least one contrast spring pressed by means of a threaded fastening element in order to axially counteract the movement of said outlet eccentric element 210, relative to the rotating shaft driven by the motor 230.

The stroke adjusting means 300 comprise at least one motorised lever 310 adapted to press against the outlet eccentric element 210 in order to move the outlet eccentric element 210 along the slotted hole 211, by means of an idle wheel 320.

The force transmitted by the idle wheel 320 exceeds the axial force exerted by the controlled grip locking means 201, 202, 203.

According to a preferred embodiment, the contrast spring is a disk spring.

At least one motorised lever 310 is controlled by a displacement sensor 330 connected to a console.

The means cooperating in relative motion 100 comprise a first series of fixed grooved means 110 cooperating with a second series of movable grooved means 120. The connecting rod 220 is connected to the second series of movable grooved means 120, by means of a connecting pin 240.

The grooves of the first series of fixed grooved means 110 and those of the second series of movable grooved means 120 consist of cylindrical semi-holes.

The eccentric device for sheller, object of the present invention, allows achieving the intended objects.

The stroke adjusting means of the means cooperating in relative motion do not need the stop of production, since they provide for an adjustment during the operational functioning of the sheller.

The manual adjustment of the machine has been eliminated, in favour of the safety and security of the operator.

If the operator has to decrease the stroke of the jaws if is sufficient to activate a button located in the control console of the machine through which the actuator will drive the wheel towards the jaws. Such thrust exceeds the friction of the disk springs that block the eccentric, moving it just enough to correct the stroke of the jaws and to optimize the production.

The operator can see the stroke set or reached on the monitor located in the same console; usually the stroke may vary from 0 to 20 mm.

The object of the present invention is an eccentric element locked to a rotating shaft driven by a motor, so as to allow the sliding of the eccentric element in order to vary the distance from the centre of rotation during motion.

The sliding of the eccentric element during motion is obtained by means of a kinematic mechanism that allows the variation of the stroke of the jaws of the sheller.

The connecting rod receives its movement from the eccentric element locked to the rotating shaft driven by the motor.
Eccentricity variation is allowed by the slotted hole of the eccentric element.

A plug or key ensures the rotation.
The disk springs, by means of a nut, tighten the eccentric element against the surface of the rotating shaft.

The nut, the disk springs and the spacers made of suitable material create sufficient friction to prevent the eccentric element from sliding during processing. Preferably, the friction force has a value approximately twice the value of the force necessary to crush the almonds.

The variation of the position of the eccentric element with respect to the rotating shaft is transmitted by the idle wheel 320 placed at a point of the motorised lever 310. Such motorised lever 310 has a hinged end 311 at a fixed point of the machine, while the free end 312 is connected to a hydraulic or electric actuator 340, by means of a plug.

If the operator has to decrease the stroke of the jaws, it is sufficient to activate a button located in the control console of the machine, to control the actuator 340 to push the idle wheel 320 towards the jaws. Such thrust exceeds the friction of the disk springs that block the eccentric element. Therefore, the displacement by a sufficient quantity to correct the stroke of the jaws and optimize the production is allowed.

The operator can control the amount of stroke set by means of a monitor located in the console. Usually the stroke may vary from 0 to 20 mm.

Instead, to increase the stroke, the operator intervenes by means of a second button, in order to control the actuator 340 to push the idle wheel towards the eccentric element.

The principle is equal to the stroke decrease operation; the thrust of the idle wheel exceeds the friction that locks the eccentric to the shaft.

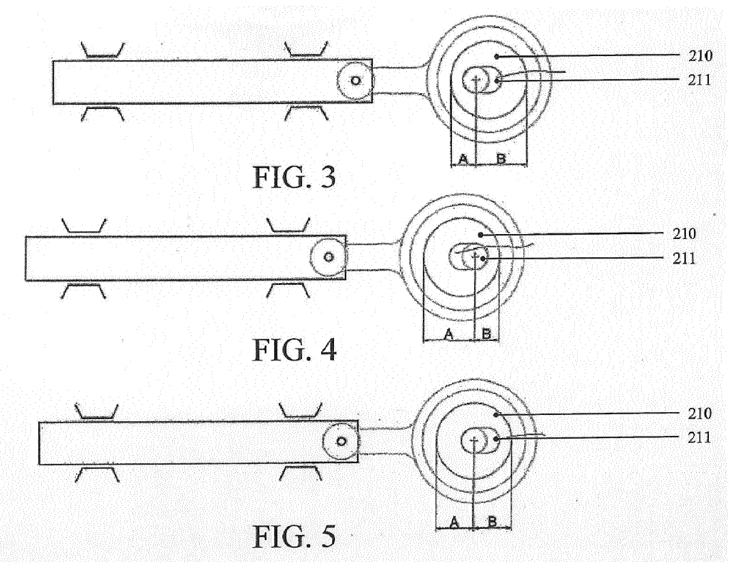

Referring to Figures 3, 4 and 5, such steps for adjusting the stroke of the jaws of the shelling machine allow varying the eccentricity parameters A and B of the machine.

The object of the present invention allows the operator to adopt the optimal stroke of the jaws during the production. This aspect is important in the almond processing industry, characterised by a variety of product to be processed, for different sizes and qualities.

Furthermore, the object of the present invention eliminates production stops for optimizing the adjustment of the stroke of the jaws.

A preferred embodiment of the invention has been described, but of course it is capable of further changes and variants within the scope of the same inventive idea. In particular, numerous variants and changes, functionally equivalent to the previous ones, which fall within the scope of protection of the invention as outlined in the appended claims in which any reference signs placed between brackets can not be interpreted in the sense to limit the same claims, will be immediately apparent to those skilled in the art. Moreover, the word "comprising" does not exclude the presence of elements and/or steps different from those listed in the claims. The article "a" or "an" preceding an element does not exclude the presence of a plurality of such elements. The simple fact that some features are mentioned in dependent claims different from each other does not indicate that a combination of these features can not be advantageously used.

## Claims

1. Sheller, for shelling dried fruit, comprising means cooperating in relative motion (100), for receiving the dried fruit and breaking the shell of the fruit by means of a reciprocated motion device (200), stroke adjusting means (300) of said means cooperating in relative motion (100), **characterised in that** said reciprocated motion device (200) comprises an outlet eccentric element (210) connected to a rotation axis in an adjustably fashion, and to at least one connecting rod (220), said outlet eccentric element (210) constrained to the rotation with controlled grip locking means (201, 202, 203) of the rotation axis.

2. Sheller according to claim 1, **characterised in that** said outlet eccentric element (210) comprises a slotted hole (211) crossed by a rotating shaft driven by a motor (230).

3. Sheller according to claim 1 or 2, **characterised in that** said controlled grip locking means (201, 202, 203) comprise at least one contrast spring pressed by means of a threaded fastening element in order to axially counteract the movement of said outlet eccentric element (210) relative to the rotating shaft driven by said motor (230).

4. Sheller according to claim 2, **characterised in that** said stroke adjusting means (300) comprise at least one motorised lever (310) adapted to press against said outlet eccentric element (210) in order to move said outlet eccentric element (210) along said slotted hole (211), by means of an idle wheel (320).

5. Sheller according to the claim 4, **characterised in that** the force transmitted by said idle wheel (320) exceeds the axial force exerted by said controlled grip locking means (201, 202, 203).

6. Sheller according to claim 3, **characterised in that** the contrast spring is a disk spring.

7. Sheller according to claim 4, **characterised in that** said at least one motorised lever (310) is controlled by means of a displacement sensor (330) connected to a console.

8. Sheller according to any one of the previous claims, **characterised in that** said cooperating means in relative motion (100) comprise a first series of fixed grooved means (110) cooperating with a second series of movable grooved means (120), said at least one connecting rod (220) connected to said second series of mobile grooved means (120), by means of a connecting pin (240).

9. Sheller according to the claim 8, **characterised in that** the grooves of said first series of fixed grooved means (110) and those of said second series of movable grooved means (120) consist of cylindrical semi-holes.

## Patentansprüche

1. Schäler zum Schälen von Trockenfrüchten, der Einheiten aufweist, die in einer Relativbewegung (100) zusammenwirken, um Trockenfrüchte aufzunehmen und die Schalen der Trockenfrüchte mittels einer hin- und hergehenden Bewegungsvorrichtung (200) aufzubrechen, wobei Hubeinstellelemente (300) der Einheiten in einer Relativbewegung (100) zusammenwirken, **dadurch gekennzeichnet, dass** die hin- und hergehende Bewegungsvorrichtung (200) ein Auslass-Exzenterelement (210) aufweist, das mit einer Drehachse in einstellbarer Weise und mit mindestens einer Verbindungsstange (220) verbunden ist, wobei das Auslass-Exzenterelement (210) mit gesteuerten Greifsperreinheiten (201, 202, 203) der Drehachse zu der Drehung gezwungen ist.

2. Schäler nach Anspruch 1, **dadurch gekennzeichnet, dass** das Auslass-Exzenterelement (210) ein Langloch (211) aufweist, das von einer rotierenden Welle durchsetzt wird, die von einem Motor (230) angetrieben wird.

3. Schäler nach Anspruch 1 oder 2, **dadurch gekennzeichnet, dass** die gesteuerten Greifsperreinheiten (201, 202, 203) mindestens eine Gegenfeder aufweisen, die mittels eines Gewindebefestigungselements angedrückt wird, um der Bewegung des Auslass-Exzenterelements (210) gegenüber der vom Motor (230) angetriebenen rotierenden Welle axial entgegenzuwirken.

4. Schäler nach Anspruch 2, **dadurch gekennzeichnet, dass** die Hubeinstellelemente (300) mindestens einen motorisierten Hebel (310) aufweisen, der dazu ausgebildet ist, gegen das Auslass-Exzenterelement (210) zu drücken, um das Auslass-Exzenterelement (210) mittels eines Leerlaufrades (320) entlang des Langlochs (211) zu bewegen.

5. Schäler nach Anspruch 4, **dadurch gekennzeichnet, dass** die von dem Leerlaufrad (320) übertragene Kraft die Axialkraft übersteigt, die von den gesteuerten Greifsperreinheiten (201, 202, 203) ausgeübt wird.

6. Schäler nach Anspruch 3, **dadurch gekennzeichnet, dass** die Gegenfeder eine Tellerfeder ist.

7. Schäler nach Anspruch 4, **dadurch gekennzeichnet, dass** der mindestens eine motorisierte Hebel (310) mittels eines mit einer Konsole verbundenen Verlagerungssensors (330) gesteuert wird.

8. Schäler nach einem der vorhergehenden Ansprüche, **dadurch gekennzeichnet, dass** die zusammenwirkenden Einheiten bei einer Relativbewegung (100) eine erste Reihe von festen, gerillten Elementen (110) aufweisen, die mit einer zweiten Reihe von beweglichen, gerillten Elementen (120) zusammenwirken, wobei die mindestens eine Verbindungsstange (220) mit der zweiten Reihe von beweglichen, gerillten Elementen (120) über einen Verbindungsstift (240) verbunden ist.

9. Schäler nach Anspruch 8, **dadurch gekennzeichnet, dass** die Rillen der ersten Reihe von festen, gerillten Elementen (110) und der zweiten Reihe von beweglichen, gerillten Elementen (120) aus zylindrischen Halblöchern bestehen.

## Revendications

1. Décortiqueuse pour décortiquer des fruits à coque comprenant un moyen coopérant à mouvement relatif (100) pour recevoir le fruit à coque et casser la coque du fruit à l'aide d'un dispositif à mouvement alternatif (200) et d'un moyen de réglage de course (300) dudit moyen coopérant à mouvement relatif (100), **caractérisée en ce que** ledit dispositif à mouvement alternatif (200) comprend un élément excentrique de sortie (210) connecté de façon réglable à une axe de rotation, et à au moins une tige de liaison (220), ledit élément excentrique de sortie (210) étant retenu en rotation par un moyen de fermeture de serrage contrôlé (201, 202, 203) de l'axe de rotation.

2. Décortiqueuse selon la revendication 1, **caractérisée en ce que** ledit élément excentrique de sortie (210) comprend un trou oblong (211) traversé par un arbre rotatif actionné par un moteur (230).

3. Décortiqueuse selon la revendication 1 ou 2, **caractérisée en ce que** ledit moyen de fermeture de serrage contrôlé (201, 202, 203) comporte au moins un ressort de rappel comprimé au moyen d'un élément de fixation fileté afin de contrebalancer axialement le mouvement dudit élément excentrique de sortie (210) par rapport à l'arbre rotatif actionné par ledit moteur (230).

4. Décortiqueuse selon la revendication 2, **caractérisée en ce que** ledit moyen de réglage de course (300) comprend au moins un levier motorisé (310) destiné à appuyer contre ledit élément excentrique de sortie (210) pour déplacer ledit élément excentrique de sortie (210) le long dudit trou oblong (211), au moyen d'une roue folle (320).

5. Décortiqueuse selon la revendication 4, **caractérisée en ce que** la force transmise par ladite roue folle (320) dépasse la force axiale exercée par ledit moyen de fermeture de serrage contrôlé (201, 202, 203).

6. Décortiqueuse selon la revendication 3, **caractérisée en ce que** le ressort d'appel est un ressort à disque.

7. Décortiqueuse selon la revendication 4, **caractérisée en ce que** ledit au moins un levier motorisé (310) est contrôlé à l'aide d'un capteur de déplacement (330) connecté à une console.

8. Décortiqueuse selon l'une quelconque des revendications précédentes, **caractérisée en ce que** ledit moyen coopérant à mouvement relatif (100) comprend un premier ensemble de moyens à gorges fixes (110) coopérant avec un deuxième ensemble de moyens à gorges mobiles (120), la dite au moins une tige de liaison (220) étant connectée au deuxième ensemble de moyens à gorges mobiles (120) par une goupille d'assemblage (240).

9. Décortiqueuse selon la revendication 8, **caractérisée en ce que** les gorges dudit premier ensemble de moyens à gorges fixes (110) et celles du deuxième ensemble de moyens à gorges mobiles (120) sont constituées de demi-trous cylindriques.
